(19) Europäisches Patentamt
European Patent Office
Office européen des brevets

(11) **EP 4 224 696 A1**

(12) **EUROPEAN PATENT APPLICATION**
published in accordance with Art. 153(4) EPC

(43) Date of publication:
**09.08.2023 Bulletin 2023/32**

(21) Application number: **20956198.4**

(22) Date of filing: **29.09.2020**

(51) International Patent Classification (IPC):
**H02M 7/49** *(2007.01)* **H02M 7/48** *(2007.01)*

(52) Cooperative Patent Classification (CPC):
**H02M 7/48; H02M 7/49**

(86) International application number:
**PCT/JP2020/036960**

(87) International publication number:
**WO 2022/070268 (07.04.2022 Gazette 2022/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION**
**Chiyoda-ku**
**Tokyo 100-8310 (JP)**

(72) Inventors:
• **NAKAMURA, Fuminori**
**Tokyo 100-8310 (JP)**
• **KIKUCHI, Takeshi**
**Tokyo 100-8310 (JP)**
• **YAMANAKA, Daisuke**
**Tokyo 100-8310 (JP)**

(74) Representative: **Witte, Weller & Partner**
**Patentanwälte mbB**
**Postfach 10 54 62**
**70047 Stuttgart (DE)**

(54) **POWER CONVERSION DEVICE**

(57) A power conversion device (100) includes a self-commutated power converter (6) that performs power conversion between an AC circuit (2) and a DC circuit (4), and a control device (5) that controls switching operation of a switching element (1a, 1b) included in the self-commutated power converter (6). The control device (5) calculates a deviation between a control command value for the self-commutated power converter (6) and a feedback value from the self-commutated power converter (6), and performs first control to increase a switching frequency of the switching element (1a, 1b) when the deviation becomes equal to or greater than a first threshold value.

FIG.1

## Description

### TECHNICAL FIELD

The present disclosure relates to a power conversion device.

### BACKGROUND ART

Modular multilevel converters (MMC) are known as large-capacity power conversion devices installed in power systems. A modular multilevel converter in which a plurality of unit converters are cascaded can be easily adapted to higher voltages by increasing the number of unit converters. "Unit converters" are also referred to as "sub modules" or "converter cells".

Japanese Patent Laying-Open No. 2018-133950 (PTL 1) discloses a power conversion device capable of converting power bidirectionally between DC voltage and AC voltage. The power conversion device is configured to output a first carrier signal having a first frequency when the absolute value of the AC voltage is equal to or greater than the absolute value of a threshold voltage and to output a second carrier signal having a second frequency higher than the first frequency when the absolute value of the AC voltage is lower than the absolute value of the first threshold voltage.

### CITATION LIST

### PATENT LITERATURE

PTL 1: Japanese Patent Laying-Open No. 2018-133950

### SUMMARY OF INVENTION

### TECHNICAL PROBLEM

In PTL 1, as described above, the frequency of the carrier signal is changed in accordance with the absolute value of the AC voltage so that the frequency of switching operation is changed to continue the operation of the power conversion device even when a ground fault occurs on the AC side. However, PTL 1 does not sufficiently consider change of the switching frequency in cases other than a ground fault on the AC side and has room for improvement in stabilization of the operation of the power conversion device.

An object of an aspect of the present disclosure is to provide a power conversion device capable of stabilizing the operation by increasing the switching frequency at an appropriate timing. Other objects and features of the present disclosure will be explained in the embodiments.

### SOLUTION TO PROBLEM

A power conversion device according to an embodiment includes a self-commutated power converter to perform power conversion between an AC circuit and a DC circuit, and a control device to control switching operation of a switching element included in the self-commutated power converter. The control device calculates a deviation between a control command value for the self-commutated power converter and a feedback value from the self-commutated power converter, and performs first control to increase a switching frequency of the switching element when the deviation becomes equal to or greater than the first threshold value.

A power conversion device according to another embodiment includes a self-commutated power converter to perform power conversion between an AC circuit and a DC circuit, and a control device to control switching operation of a switching element included in the self-commutated power converter. The control device performs control to increase a switching frequency of the switching element when a rate of change of a control command value for the self-commutated power converter becomes equal to or greater than a reference rate of change.

### ADVANTAGEOUS EFFECTS OF INVENTION

The power conversion device according to the present disclosure can stabilize the operation by increasing the switching frequency at an appropriate timing.

### BRIEF DESCRIPTION OF DRAWINGS

Fig. 1 is a schematic configuration diagram of a power conversion device.
Fig. 2 is a block diagram showing a configuration example of a converter cell.
Fig. 3 is a circuit diagram showing a modification to a main circuit of the converter cell.
Fig. 4 is a block diagram showing an overall configuration of a control device.
Fig. 5 is a block diagram showing an exemplary hardware configuration of the control device.
Fig. 6 is a block diagram showing the operation of an arm common controller.
Fig. 7 is a diagram for explaining the operation of an AC control unit 35 in the arm common controller.
Fig. 8 is a diagram for explaining a system voltage controller.
Fig. 9 is a diagram for explaining the operation of a DC control unit 36 in the arm common controller.
Fig. 10 is a block diagram showing the operation of a u-phase arm controller.
Fig. 11 is a block diagram showing the operation of a cell individual controller for a positive-side arm.
Fig. 12 is a diagram for explaining the operation of a frequency switching unit according to a first embodiment.

Fig. 13 is a diagram for explaining the operation of a frequency switching unit according to a first modification to the first embodiment.

Fig. 14 is a diagram for explaining the operation of a frequency switching unit according to a second modification to the first embodiment.

Fig. 15 is a diagram for explaining a method of increasing a switching frequency according to a third modification to the first embodiment.

Fig. 16 is a diagram for explaining the operation of a frequency switching unit according to a second embodiment.

DESCRIPTION OF EMBODIMENTS

Embodiments of the present disclosure will be described below with reference to the drawings. In the following description, the same parts are denoted by the same reference signs. Their names and functions are also the same. A detailed description thereof will not be repeated.

First Embodiment

<Overall Configuration of Power Conversion Device>

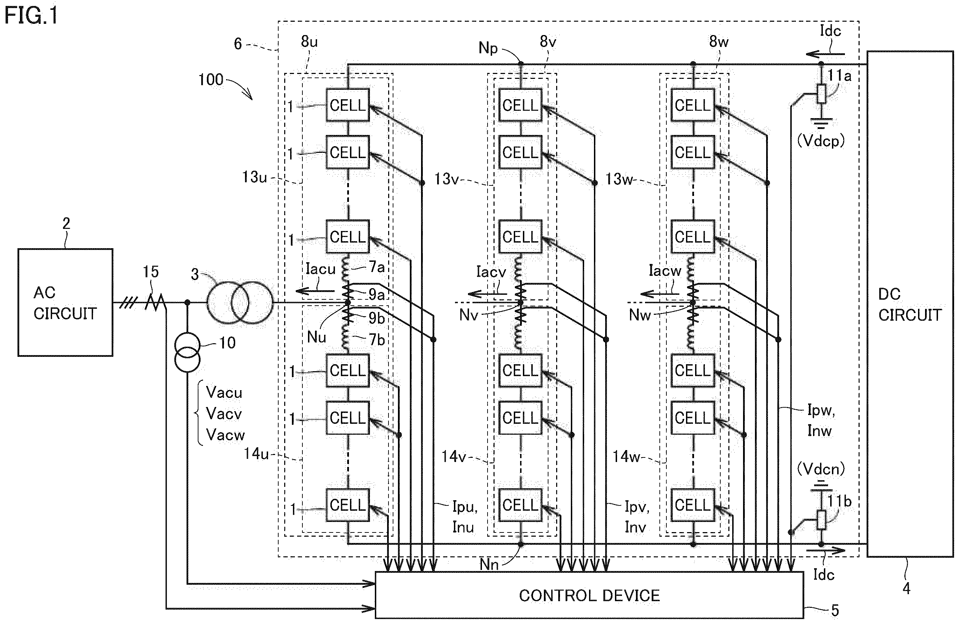

Fig. 1 is a schematic configuration diagram of a power conversion device 100. Power conversion device 100 is, for example, a power conversion device for use for high-voltage DC power transmission or a power conversion device for forward conversion or reverse conversion in a frequency converter.

Referring to Fig. 1, power conversion device 100 includes a self-commutated power converter 6 that performs power conversion between an AC circuit 2 and a DC circuit 4, and a control device 5. Typically, power converter 6 is configured with a MMC conversion-type power converter including a plurality of converter cells 1 connected in series to each other. However, power converter 6 may be of a conversion type other than the MMC conversion type. Power converter 6 includes a plurality of leg circuits 8u, 8v, and 8w (hereinafter referred to as "leg circuit 8" when they are collectively referred to or any one of them is referred to) connected in parallel to each other between a positive-side DC terminal (that is, a high potential-side DC terminal) Np and a negative-side DC terminal (that is, a low potential-side DC terminal) Nn.

Control device 5 controls the switching operation of switching elements included in these leg circuits 8. As will be detailed later, control device 5 changes the switching frequency of the switching elements as appropriate in accordance with various conditions, in view of operation stabilization and power conversion efficiency of power converter 6.

Leg circuit 8 is provided for each phase of multiphase alternating current and connected between AC circuit 2 and DC circuit 4 to perform power conversion between those circuits. In Fig. 1, AC circuit 2 is for three-phase alternating current, and three leg circuits 8u, 8v, and 8w are provided respectively corresponding to u phase, v phase, and w phase. When AC circuit 2 is for single-phase alternating current, two leg circuits are provided.

AC terminals Nu, Nv, and Nw respectively provided for leg circuits 8u, 8v, and 8w are connected to AC circuit 2 through a transformer 3. AC circuit 2 is, for example, an AC power system including an AC power source. In Fig. 1, for simplification of illustration, the connection between AC terminals Nv and Nw and transformer 3 is not shown. The DC terminals (that is, positive-side DC terminal Np, negative-side DC terminal Nn) provided common to leg circuits 8 are connected to DC circuit 4. DC circuit 4 is, for example, a DC power system including a DC power transmission grid and another power conversion device that outputs direct current.

Instead of using transformer 3 in Fig. 1, leg circuits 8u, 8v, and 8w may be connected to AC circuit 2 through an interconnecting reactor. Furthermore, instead of AC terminals Nu, Nv, and Nw, leg circuits 8u, 8v, and 8w may be provided with respective primary windings, and leg circuits 8u, 8v, and 8w may be AC connected to transformer 3 or the interconnecting reactor through secondary windings magnetically coupled to the primary windings. In this case, the primary windings may be the following reactors 7a and 7b. Specifically, leg circuits 8 are electrically (that is, DC or AC) connected to AC circuit 2 through connections provided for leg circuits 8u, 8v, and 8w, such as AC terminals Nu, Nv, and Nw or the primary windings.

Leg circuit 8u is divided into a positive-side arm 13u from positive-side DC terminal Np to AC terminal Nu and a negative-side arm 14u from negative-side DC terminal Nn to AC terminal Nu. The connection point between positive-side arm 13u and negative-side arm 14u is AC terminal Nu connected to transformer 3. Positive-side DC terminal Np and negative-side DC terminal Nn are connected to DC circuit 4. Leg circuit 8v includes a positive-side arm 13v and a negative-side arm 14v, and leg circuit 8w includes a positive-side arm 13w and a negative-side arm 14w. Leg circuits 8v and 8w have a configuration similar to that of leg circuit 8u, and hereinafter leg circuit 8u is explained as a representative.

In leg circuit 8u, positive-side arm 13u includes a plurality of cascaded converter cells 1 and a reactor 7a. Converter cells 1 and reactor 7a are connected in series with each other. Negative-side arm 14u includes a plurality of cascaded converter cells 1 and a reactor 7b. Converter cells 1 and reactor 7b are connected in series with each other.

Reactor 7a may be inserted at any position in positive-side arm 13u, and reactor 7b may be inserted at any position in negative-side arm 14u. A plurality of reactors 7a and a plurality of reactors 7b may be provided. The inductances of the reactors may be different from each other. Only reactor 7a of positive-side arm 13u or only reactor 7b of negative-side arm 14u may be provided.

Power conversion device 100 further includes an AC voltage detector 10, an AC current detector 15, DC voltage detectors 11a and 11b, and arm current detectors 9a and 9b provided for each leg circuit 8. These detectors measure the quantity of electricity (that is, current, voltage) for use in control of power conversion device 100. Signals detected by these detectors are input to control device 5.

Specifically, AC voltage detector 10 detects a u-phase AC voltage measured value Vacu, a v-phase AC voltage measured value Vacv, and a w-phase AC voltage measured value Vacw of AC circuit 2. AC current detector 15 is provided for each of u phase, v phase, and w phase of AC circuit 2 and detects an AC current measured value of the corresponding phase. DC voltage detector 11a detects a DC voltage measured value Vdcp at positive-side DC terminal Np connected to DC circuit 4. DC voltage detector 1 1b detects a DC voltage measured value Vdcn at negative-side DC terminal Nn connected to DC circuit 4.

Arm current detectors 9a and 9b provided in leg circuit 8u for u phase respectively detect a positive-side arm current measured value Iup flowing through positive-side arm 13u and negative-side arm current measured value Iun flowing through negative-side arm 14u. Arm current detectors 9a and 9b provided in leg circuit 8v for v phase respectively detect positive-side arm current measured value Ivp and negative-side arm current measured value Ivn. Arm current detectors 9a and 9b provided for leg circuit 8w for w phase respectively detect positive-side arm current measured value Iwp and negative-side arm current measured value Iwn. Here, in positive-side arm current measured values Iup, Ivp, and Iwp and negative-side arm current measured values Iun, Ivn, and Iwn, current flowing in the direction from positive-side DC terminal Np to negative-side DC terminal Nn is positive.

<Configuration of Converter Cell>

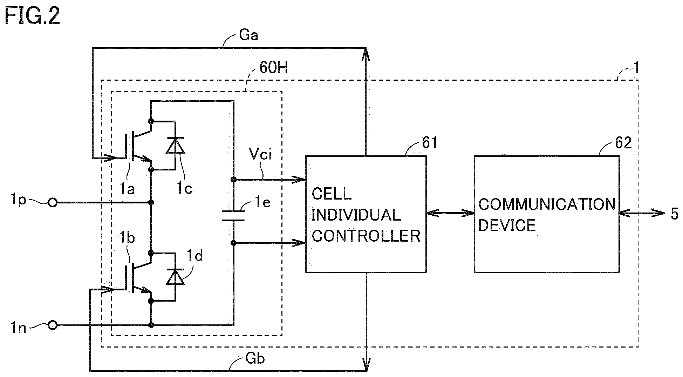

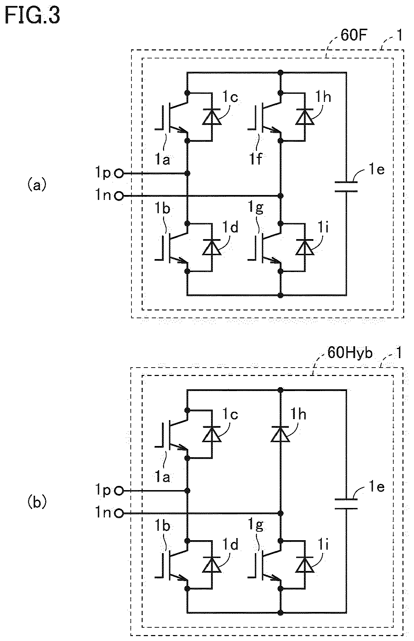

Fig. 2 is a block diagram showing a configuration example of converter cell 1. Referring to Fig. 2, converter cell 1 as an example includes a cell main circuit 60H, a cell individual controller 61, and a communication device 62. In Fig. 2, the configuration of half bridge-type cell main circuit 60H is shown. As described later with reference to Fig. 3, a bridge circuit of a different configuration may be used instead of cell main circuit 60H.

As shown in Fig. 2, cell main circuit 60H includes switching elements 1a and 1b connected in series to each other, diodes 1c and 1d, and a capacitor 1e serving as an energy storage. Diodes 1c and 1d are connected in anti-parallel (that is, in parallel and in reverse bias direction) with switching elements 1a and 1b, respectively. Capacitor 1e is connected in parallel with the series connection circuit of switching elements 1a and 1b and smooths a DC voltage. The connection node of switching elements 1a and 1b is connected to positive-side input/output terminal 1p, and the connection node of switching element 1b and capacitor 1e is connected to negative-side input/output terminal 1n.

In cell main circuit 60H, switching elements 1a and 1b are controlled such that one of them is turned on and the other is turned off. When switching element 1a is turned on and switching element 1b is turned off, the voltage between both ends of capacitor 1e is applied between input/output terminals 1p and 1n. In this case, input/output terminal 1p has a positive-side voltage, and input/output terminal 1n has a negative-side voltage. On the other hand, when switching element 1a is turned off and switching element 1b is turned on, the voltage between input/output terminals 1p and 1n is 0 V. In this way, in cell main circuit 60H, switching elements 1a and 1b are alternately turned on, whereby zero voltage or positive voltage can be output. The magnitude of positive voltage is dependent on the voltage at capacitor 1e. Diodes 1c and 1d are provided for protection for when a reverse-direction voltage is applied to switching elements 1a and 1b.

Cell individual controller 61 controls the on and off of switching elements 1a and 1b provided in cell main circuit 60H, based on an arm voltage command value and a circulating voltage command value received from control device 5. Specifically, cell individual controller 61 outputs gate control signals Ga and Gb to the control electrodes of switching elements 1a and 1b, respectively.

Furthermore, cell individual controller 61 detects a voltage value (that is, capacitor voltage measured value) of capacitor 1e and performs analog-to-digital (A/D) conversion of the detected voltage value. Cell individual controller 61 uses the detected capacitor voltage measured value Vci for voltage control of capacitor 1e. Furthermore, cell individual controller 61 transmits the detected capacitor voltage measured value Vci to control device 5 through communication device 62.

Communication device 62 communicates with a communication circuit provided in control device 5 to receive an arm voltage command value and a circulating voltage command value from control device 5. Furthermore, communication device 62 transmits the capacitor voltage measured value Vci after A/D conversion detected by cell individual controller 61 to control device 5. The form of communication between communication device 62 and control device 5 is preferably optical communication in view of noise immunity and in view of insulation properties.

Fig. 3 is a circuit diagram showing a modification to a main circuit of converter cell 1. Converter cell 1 shown in Fig. 3(a) includes a full bridge-type cell main circuit 60F. Cell main circuit 60F differs from cell main circuit 60H in Fig. 3(a) in that it further includes switching elements 1f and 1g connected in series and diodes 1h and 1i connected in anti-parallel with switching elements 1f and 1g, respectively. The series connection circuit of switching elements 1f and 1g is connected in parallel with the series connection circuit of switching elements 1a and 1b and is connected in parallel with capacitor 1e. Input/output terminal 1p is connected to the connection node of switching elements 1a and 1b, and input/output terminal 1n is connected to the connection node of switching elements 1f and 1g.

In normal operation, cell main circuit 60F shown in Fig. 3(a) is controlled such that switching element 1g is turned on, switching element 1f is turned off, and switching elements 1a and 1b are alternately turned on. Thus, cell main circuit 60F can output zero voltage or positive voltage between input/output terminals 1p and 1n. Cell main circuit 60F can also output zero voltage or negative voltage between input/output terminals 1p and 1n under control different from that of normal operation. Specifically, switching element 1g is turned off, switching element 1f is turned on, and switching elements 1a and 1b are alternately turned on, whereby zero voltage or negative voltage can be output.

Converter cell 1 shown in Fig. 3(b) includes a hybrid-type cell main circuit 60Hyb. Cell main circuit 60Hyb has a configuration in which switching element 1f is eliminated from cell main circuit 60F in Fig. 3(a). In normal operation, cell main circuit 60Hyb in Fig. 3(b) is controlled such that switching element 1g is turned on and switching elements 1a and 1b are alternately turned on. Thus, cell main circuit 60Hyb can output zero voltage or positive voltage between input/output terminals 1p and 1n. On the other hand, cell main circuit 60Hyb can output negative voltage when switching elements 1a and 1g are turned off, switching element 1b is turned on, and current flows in the direction from input/output terminal 1n to input/output terminal 1p.

Self-turn-off semiconductor switching elements capable of controlling both the on operation and the off operation are used for switching elements 1a, 1b, 1f, and 1g shown in Fig. 2, Fig. 3(a), and Fig. 3(b). For example, insulated gate bipolar transistors (IGBTs) or gate commutated turn-off thyristors (GCTs) can be used as switching elements 1a, 1b, 1f, and 1g.

Hereinafter, cell main circuits 60H, 60F, and 60Hyb may be collectively denoted as cell main circuit 60. Cell main circuit 60 included in converter cell 1 may have a configuration other than those shown in Fig. 2, Fig. 3(a), and Fig. 3(b). For simplification of description, hereinafter an example in which converter cell 1 has the configuration of cell main circuit 60H in Fig. 2 will be described.

<Overall Configuration of Control Device>

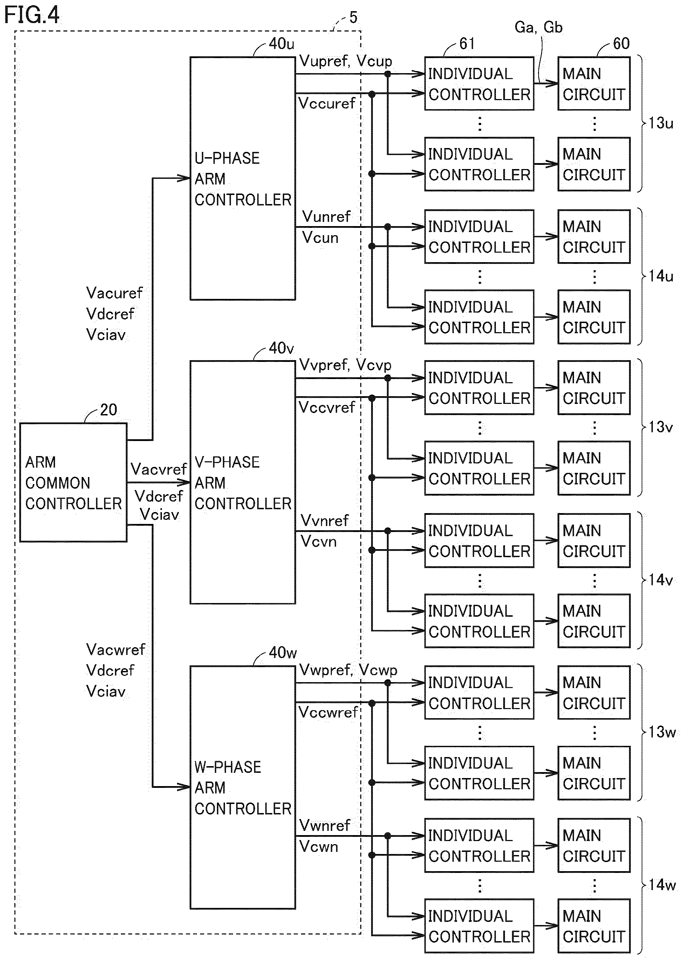

Fig. 4 is a block diagram showing an overall configuration of control device 5. Fig. 4 also shows cell main circuit (corresponding to "main circuit" in Fig. 4) 60 and cell individual controller (corresponding to "individual controller" in Fig. 4) 61 provided in each converter cell 1. For simplification of illustration, communication device 62 is not illustrated in the drawing.

Referring to Fig. 4, control device 5 includes an arm common controller 20, a u-phase arm controller 40u, a v-phase arm controller 40v, and a w-phase arm controller 40w.

Arm common controller 20 generates AC voltage command values Vacuref, Vacvref, and Vacwref of u phase, v phase, and w phase, based on the arm current measured value and the AC voltage measured value. Furthermore, arm common controller 20 outputs a DC voltage command value Vdcref. Furthermore, arm common controller 20 generates Vciav that is the mean value of capacitor voltage from capacitor voltage measured values Vci of converter cells 1.

U-phase arm controller 40u generates a u-phase arm voltage command value, based on AC voltage command value Vacuref and DC voltage command value Vdcref received from arm common controller 20. The u-phase arm voltage command value includes a positive-side arm voltage command value Vupref to be output to positive-side arm 13u and a negative-side arm voltage command value Vunref to be output to negative-side arm 14u.

U-phase arm controller 40u further generates a circulating voltage command value Vccuref, based on capacitor voltage mean value Vciav received from arm common controller 20 and the u-phase circulating current value at the present time. Circulating voltage command value Vccuref is a voltage command value to be output in common to the converter cells 1 of positive-side arm 13u and negative-side arm 14u in order to control u-phase circulating current.

U-phase arm controller 40u further outputs a positive-side capacitor voltage mean value Vcup to each cell individual controller 61 of positive-side arm 13u. U-phase arm controller 40u also outputs a negative-side capacitor voltage mean value Vcun to each cell individual controller 61 of negative-side arm 14u.

V-phase arm controller 40v generates a v-phase arm voltage command value, based on AC voltage command value Vacvref and DC voltage command value Vdcref. The v-phase arm voltage command value includes a positive-side arm voltage command value Vvpref to be output to positive-side arm 13v and a negative-side arm voltage command value Vvnref to be output to negative-side arm 14v. V-phase arm controller 40v further generates a circulating voltage command value Vccvref, based on capacitor voltage mean value Vciav received from arm common controller 20 and the v-phase circulating current value at the present time. Circulating voltage command value Vccvref is a voltage command value to be output in common to the converter cells 1 of positive-side arm 13v and negative-side arm 14v in order to control v-phase circulating current. V-phase arm controller 40v further outputs a positive-side capacitor voltage mean value Vcvp to each cell individual controller 61 of positive-side arm 13v. V-phase arm controller 40v also outputs a negative-side capacitor voltage mean value Vcvn to each cell individual controller 61 of negative-side arm 14v.

W-phase arm controller 40w generates a w-phase arm voltage command value, based on AC voltage command value Vacwref and DC voltage command value Vdcref. The w-phase arm voltage command value includes a positive-side arm voltage command value Vwpref to be output to positive-side arm 13w and a negative-side arm voltage command value Vwnref to be output to negative-side arm 14w. W-phase arm controller 40w further generates a circulating voltage command value Vccwref, based on capacitor voltage mean value Vciav received from arm common controller 20 and the w-phase circulating current value at the present time. Circulating voltage command value Vccwref is a voltage command value to be output in common to the converter cells 1 of positive-side arm 13w and negative-side arm 14w in order to control w-phase circulating current. W-phase arm controller 40w further outputs a positive-side capacitor voltage mean value Vcwp to each cell individual controller 61 of positive-side arm 13w. W-phase arm controller 40w also outputs a negative-side capacitor voltage mean value Vcwn to each cell individual controller 61 of negative-side arm 14w.

Arm controller 40u, 40v, 40w of each phase transmits the arm voltage command value, the circulating voltage command value, and the capacitor voltage mean value to cell individual controller 61 of the corresponding converter cell 1 through an optical communication channel.

<Hardware Configuration Example of Control Device>

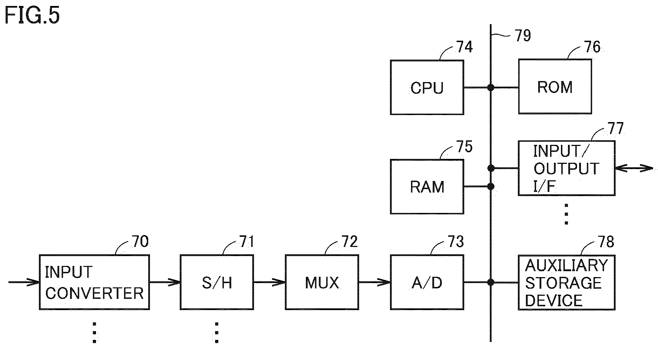

Fig. 5 is a block diagram showing an exemplary hardware configuration of control device 5. Control device 5 in Fig. 5 is configured based on a computer. Referring to Fig. 5, control device 5 includes one or more input converters 70, one or more sample and hold (S/H) circuits 71, a multiplexer (MUX) 72, and an A/D converter 73. Control device 5 further includes one or more central processing units (CPUs) 74, a random access memory (RAM) 75, and a read only memory (ROM) 76. Control device 5 further includes one or more input/output interfaces 77, an auxiliary storage device 78, and a bus 79 connecting the components above to each other.

Input converter 70 includes an auxiliary transformer for each input channel. Each auxiliary transformer converts a detection signal from each electrical quantity detector in Fig. 1 into a signal at a voltage level suitable for subsequent signal processing.

Sample and hold circuit 71 is provided for each input converter 70. Sample and hold circuit 71 samples a signal representing the electrical quantity received from the corresponding input converter 70 at a predetermined sampling frequency and holds the signal.

Multiplexer 72 successively selects the signals held by a plurality of sample and hold circuits 71. A/D converter 73 converts a signal selected by multiplexer 72 into a digital value. A plurality of A/D converters 73 may be provided to perform A/D conversion of detection signals of a plurality of input channels in parallel.

CPU 74 controls the entire control device 5 and performs computational processing under instructions of a program. RAM 75 as a volatile memory and ROM 76 as a nonvolatile memory are used as a main memory of CPU 74. ROM 76 stores a program and setting values for signal processing. Auxiliary storage device 78 is a nonvolatile memory having a larger capacity than ROM 76 and stores a program and data such as electrical quantity detected values.

Input/output interface 77 is an interface circuit for communication between CPU 74 and an external device.

At least a part of control device 5 may be configured using circuitry such as a field programmable gate array (FPGA) and an application specific integrated circuit (ASIC). Cell individual controller 61 for each converter cell may also be configured based on a computer in the same manner as control device 5 and may be at least partially configured with circuitry such as an FPGA and an ASIC. Alternatively, at least a part of control device 5 and at least a part of cell individual controller 61 may be configured with an analog circuit.

<Operation of Arm Common Controller>

(Overview)

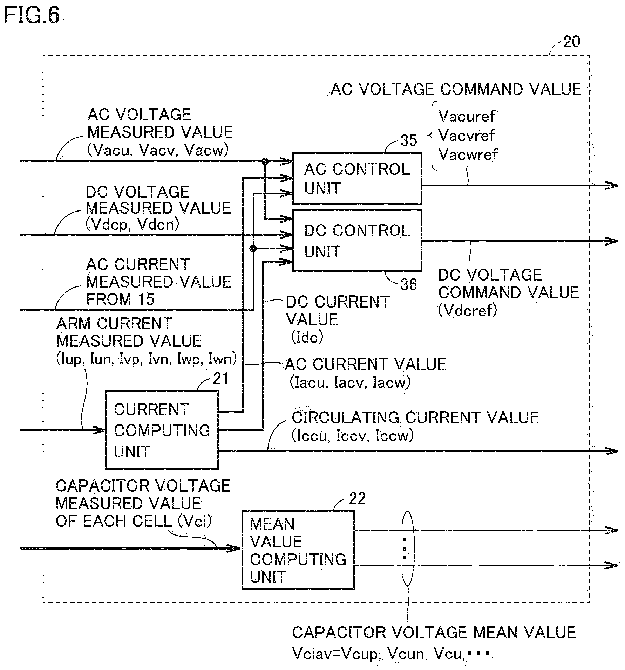

Fig. 6 is a block diagram showing the operation of arm common controller 20. Referring to Fig. 6, arm common controller 20 includes an AC control unit 35, a DC control unit 36, a current computing unit 21, and a mean value computing unit 22. The functions of these components are implemented by, for example, CPU 74.

AC control unit 35 generates AC voltage command values Vacuref, Vacvref, and Vacwref, based on AC voltage measured values Vacu, Vacv, and Vacw detected by AC voltage detector 10, the AC current measured values detected by AC current detector 15, and AC current values Iacu, Iacv, and Iacw computed by current computing unit 21. The detailed operation of AC control unit 35 will be described later.

DC control unit 36 generates DC voltage command value Vdcref. The configuration of DC control unit 36 varies between when the power conversion device operates as a rectifier to supply power from the AC circuit to the DC circuit and when the power conversion device operates as an inverter. When the power conversion device operates as a rectifier, DC control unit 36 generates DC voltage command value Vdcref, based on DC voltage measured values Vdcp and Vdcn. On the other hand, when the power conversion device operates as an inverter, DC control unit 36 generates DC voltage command value Vdcref, based on AC voltage measured values Vacu, Vacv, and Vacw, AC current measured value of each phase detected by AC current detector 15, and DC current value Idc computed by current computing unit 21. The detailed operation of DC control unit 36 will be described later.

(Operation of Current Computing Unit)

Current computing unit 21 calculates DC current value Idc, AC current values Iacu, Iacv, and Iacw, and circulating current values Iccu, Iccv, and Iccw, based on the arm current measured values. Specifically, the procedure is as follows.

As shown in Fig. 1, AC terminal Nu that is the connection point between positive-side arm 13u and negative-side arm 14u of leg circuit 8u is connected to transformer 3. AC current value Iacu flowing from AC terminal Nu toward transformer 3 is therefore a current value obtained by subtracting negative-side arm current measured value Iun from positive-side arm current measured value Iup as indicated by the following equation (1).

$$Iacu=Iup-Iun \; ... \; (1)$$

When the mean value of positive-side arm current measured value Iup and negative-side arm current measured value Iun is a common current flowing through positive-side arm 13u and negative-side arm 14u, this current is a leg current Icomu flowing through the DC terminal of leg circuit 8u. Leg current Icomu is represented by the following equation (2).

$$Icomu=(Iup+Iun)/2 \; ... \; (2)$$

For the v phase, AC current value Iacv and leg current Icomv are also calculated using positive-side arm current measured value Ivp and negative-side arm current measured value Ivn, and for the w phase, AC current value Iacw and leg current Icomw are also calculated using positive-side arm current measured value Iwp and negative-side arm current measured value Iwn. Specifically, these are represented by the following equations (3) to (6).

$$Iacv=Ivp-Ivn \; ... \; (3)$$

$$Icomv=(Ivp+Ivn)/2 \; ... \; (4)$$

$$Iacw=Iwp-Iwn \; ... \; (5)$$

$$Icomw=(Iwp+Iwn)/2 \; ... \; (6)$$

The DC terminal on the positive side of leg circuit 8u, 8v, 8w of each phase is connected in common as positive-side DC terminal Np, and the DC terminal on the negative side is connected in common as negative-side DC terminal Nn. Based on this configuration, the current value obtained by adding leg current Icomu, Icomv, Icomw of each phase is a DC current value Idc flowing from the positive-side terminal of DC circuit 4 and back to DC circuit 4 through the negative-side terminal. DC current value Idc is therefore represented by equation (7).

$$Idc=Icomu+Icomv+Icomw \; ... \; (7)$$

The DC current component included in leg current can be shared equally among the phases so that the current capacity of cells can be made equal. Considering this, the difference between the leg current and 1/3 of the DC current value can be computed as the current value of circulating current that does not flow to DC circuit 4 but flows between the legs of the phases. Specifically, circulating current values Iccu, Iccv, and Iccw of u phase, v phase, and w are represented by the following equations (8), (9), and (10), respectively.

$$Iccu=Icomu-Idc/3 \; ... \; (8)$$

$$Iccv=Icomv-Idc/3 \; ... \; (9)$$

$$Iccw=Icomw-Idc/3 \; ... \; (10)$$

(Operation of Mean Value Computing Unit)

Mean value computing unit 22 calculates a variety of capacitor voltage mean value Vciav from individual capacitor voltage measured values Vci detected in converter cells 1.

Specifically, mean value computing unit 22 calculates all-capacitor voltage mean value Vcall that is the voltage mean value of all the capacitors included in the entire power converter 6. Mean value computing unit 22 also calculates positive-side capacitor voltage mean value Vcup that is the voltage mean value of the capacitors included in positive-side arm 13u, negative-side capacitor voltage mean value Vcun that is the voltage mean value of the capacitors included in negative-side arm 14u, and capacitor voltage mean value Vcu that is the voltage mean value of all the capacitors included in the entire leg circuit 8u.

Mean value computing unit 22 calculates positive-side capacitor voltage mean value Vcvp in positive-side arm 13v, negative-side capacitor voltage mean value Vcvn in negative-side arm 14v, and capacitor voltage mean value Vcv in the entire leg circuit 8v.

Mean value computing unit 22 calculates positive-side capacitor voltage mean value Vcwp in positive-side arm 13w, negative-side capacitor voltage mean value Vcwn in negative-side arm 14w, and capacitor voltage mean value Vcw in the entire leg circuit 8w. In the present description, capacitor voltage mean value Vciav is used as a generic term of various mean values described above.

(Detailed Operation of AC Control Unit)

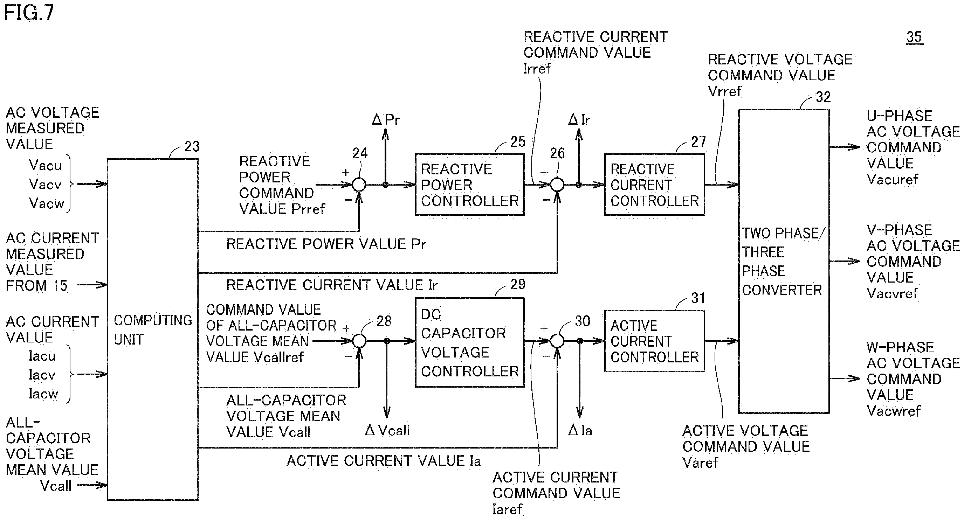

Fig. 7 is a diagram for explaining the operation of AC control unit 35 in arm common controller 20. Referring to Fig. 7, AC control unit 35 includes a computing unit 23, a reactive power controller 25, a reactive current controller 27, a DC capacitor voltage controller 29, and an active current controller 31. AC control unit 35 further includes subtracters 24, 26, 28, and 30 and a two phase/three phase converter 32.

Computing unit 23 receives AC voltage measured value Vacu, Vacv, Vacw of each phase, AC current measured value of each phase of AC circuit 2 detected by AC current detector 15, and AC current value Iacu, Iacv, Iacw calculated by current computing unit 21. Computing unit 23 calculates a reactive power value Pr, based on AC voltage measured value Vacu, Vacv, Vacw of each phase and AC current measured value of each phase. Computing unit 23 further calculates an active current value Ia and a reactive current value Ir, based on AC voltage measured value Vacu, Vacv, Vacw of each phase and the calculated AC current value Iacu, Iacv, Iacw.

Subtracter 24 calculates a deviation ΔPr between the applied reactive power command value Prref and reactive power value Pr calculated by computing unit 23. Reactive power command value Prref may be a fixed value or may be a variable value obtained by some computation.

Reactive power controller 25 generates a reactive current command value Irref for controlling reactive current output from power converter 6 so that deviation ΔPr calculated by subtracter 24 becomes zero. Reactive power controller 25 may be configured as a PI controller that performs proportional computation and integral computation on deviation ΔPr or may be configured as a PID controller that additionally performs derivative computation. Alternatively, the configuration of another controller for use in feedback control may be used as reactive power controller 25. As a result, feedback control is performed such that reactive power value Pr is equal to reactive power command value Prref.

Subtracter 26 calculates a deviation ΔIr between reactive current command value Irref and reactive current value Ir calculated by computing unit 23.

Reactive current controller 27 generates a reactive voltage command value Vrref for controlling reactive voltage output from power converter 6 so that deviation ΔIr calculated by subtracter 26 becomes zero. Reactive current controller 27 may be configured as a PI controller, a PID controller, or another controller for use in feedback control. As a result, feedback control is performed such that reactive current value Ir is equal to reactive current command value Irref.

Subtracter 28 calculates a deviation ΔVcall between command value Vcallref applied for the all-capacitor voltage mean value and all-capacitor voltage mean value Vcall. As described above, all-capacitor voltage mean value Vcall is obtained by averaging capacitor voltage measured values Vci of individual cells over the entire power conversion device. Command value Vcallref may be a fixed value or may be a variable value obtained by some computation.

DC capacitor voltage controller 29 generates an active current command value Iaref for controlling active current output from power converter 6 so that deviation ΔVcall calculated by subtracter 28 becomes zero. DC capacitor voltage controller 29 may be configured as a PI controller, a PID controller, or another controller for used in feedback control. As a result, feedback control is performed such that all capacitor voltage mean value Vcall is equal to command value V callref.

Subtracter 30 calculates a deviation ΔIa between active current command value Iaref and active current value Ia calculated by computing unit 23.

Active current controller 31 generates an active voltage command value Varef for controlling active voltage output from power converter 6 so that deviation ΔIa calculated by subtracter 30 becomes zero. Active current controller 31 may be configured as a PI controller, a PID controller, or another controller for use in feedback control. As a result, feedback control is performed such that active current value Ia is equal to active current command value Iaref.

Two phase/three phase converter 32 generates u-phase AC voltage command value Vacuref, v-phase AC voltage command value Vacvref, and w-phase AC voltage command value Vacwref by coordinate transformation from active voltage command value Varef and reactive voltage command value Vrref. The coordinate transformation by two phase/three phase converter 32 can be implemented by, for example, inverse Park transformation and inverse Clarke transformation. Alternatively, the coordinate transformation by two phase/three phase converter 32 can be implemented by inverse Park transformation and spatial vector transformation.

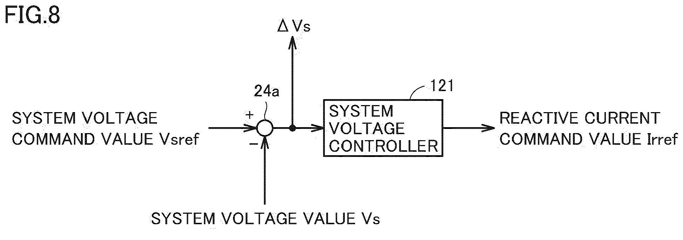

In Fig. 7, the configuration in which AC control unit 35 includes reactive power controller 25 has been described. However, as shown in Fig. 8, AC control unit 35 may include a system voltage controller instead of reactive power controller 25.

Fig. 8 is a diagram for explaining a system voltage controller 121. Referring to Fig. 8, subtracter 24a calculates a deviation ΔVs between the applied system voltage command value Vsref and a system voltage value Vs. System voltage command value Vsref may be a fixed value or may be a variable value obtained by some computation.

System voltage controller 121 generates a reactive current command value Irref for controlling reactive current output from power converter 6 so that deviation ΔVs calculated by subtracter 24a becomes zero. System voltage controller 121 may be configured as a PI controller, a PID controller, or another controller for use in feedback control. As a result, feedback control is performed such that system voltage value Vs is equal to system voltage command value Vsref.

System voltage value Vs is calculated by computing unit 23. For example, computing unit 23 calculates a root mean square value of AC voltage measured values Vacu, Vacv, and Vacw as system voltage value Vs.

As will be described in detail later, the above deviations ΔPr, ΔIr, ΔVcall, ΔIa, and ΔVs are used as indicators when the switching frequency of each converter cell 1 is switched.

(Detailed Operation of DC Control Unit)

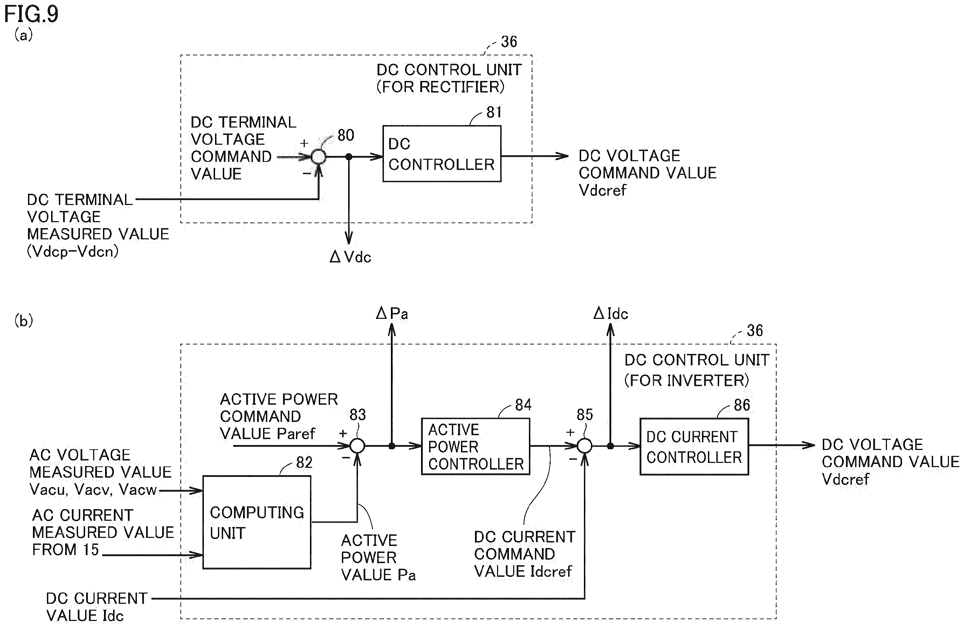

Fig. 9 is a diagram for explaining the operation of DC control unit 36 in arm common controller 20. Fig. 9(a) is a functional block diagram in a case where power conversion device 100 operates as a rectifier that supplies power from AC circuit 2 to DC circuit 4. Fig. 9(b) is a functional block diagram in a case where power conversion device 100 operates as an inverter that supplies active power from DC circuit 4 to AC circuit 2. Power conversion device 100 provided at one end of a DC transmission line includes a DC control unit 36 having the configuration in Fig. 9(a), and power conversion device 100 provided at the other end of the DC transmission line includes a DC control unit 36 having the configuration in Fig. 9(b).

Referring to Fig. 9(a), DC control unit 36 for rectifier includes a subtracter 80 and a DC controller 81. Subtracter 80 calculates a deviation ΔVdc between the applied DC terminal voltage command value and DC terminal voltage value Vdc (= Vdcp-Vdcn). DC terminal voltage value Vdc is a transmission end voltage obtained from DC voltage measured values Vdcp and Vdcn detected by DC voltage detectors 11a and 11b. DC controller 81 generates a DC voltage command value Vdcref for controlling DC voltage output from power converter 6 so that deviation ΔVdc becomes zero. For example, DC controller 81 may be configured as a PI controller, a PID controller, or another controller for use in feedback control. As a result, feedback control is performed such that DC terminal voltage value Vdc is equal to the DC terminal voltage command value.

Referring to Fig. 9(b), DC control unit 36 for inverter includes a computing unit 82, subtracters 83 and 85, an active power controller 84, and a DC current controller 86.

Computing unit 82 receives AC voltage measured value Vacu, Vacv, Vacw of each phase and AC current measured value of each phase of AC circuit 2 detected by AC current detector 15. Computing unit 82 calculates an active power value Pa, based on these voltage values and current values. Subtracter 83 calculates a deviation ΔPa between the applied active power command value Paref and the calculated active power value Pa. Active power command value Paref may be a fixed value or may be a variable value obtained by some computation.

Active power controller 84 generates a DC current command value Idcref for controlling DC current output from power converter 6 so that deviation ΔPa calculated by subtracter 83 becomes zero. Active power controller 84 may be configured as, for example, a PI controller, a PID controller, or another controller for use in feedback control. As a result, feedback control is performed such that active power value Pa is equal to active power command value Paref.

Subtracter 85 calculates a deviation ΔIdc between DC current command value Idcref and DC current value Idc. As described above, DC current value Idc is calculated by current computing unit 21 using the arm current measured values.

DC current controller 86 generates a DC voltage command value Vdcref for controlling DC voltage output from power converter 6 so that deviation ΔIdc calculated by subtracter 85 becomes zero. DC current controller 86 may be configured as, for example, a PI controller, a PID controller, or another controller for used in feedback control. As a result, feedback control is performed such that DC current value Idc is equal to DC current command value Idcref.

As will be described in detail later, the above deviations ΔVdc, ΔPa, and ΔIdc are used as indicators when the switching frequency of each converter cell 1 is switched.

<Operation of Arm Controller of Each Phase>

The operation of arm controller 40u, 40v, 40w of each phase will be described. In the following, the operation of u-phase arm controller 40u is described as a representative. The operation of v-phase arm controller 40v and w-phase arm controller 40w is the same as the operation described below, where the u phase should read as the v phase and the w phase.

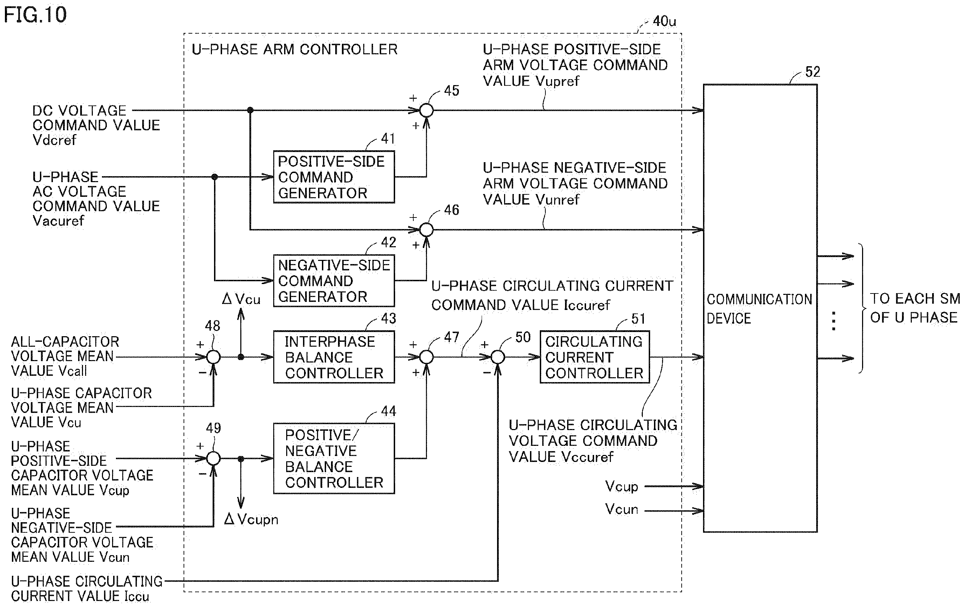

Fig. 10 is a block diagram showing the operation of u-phase arm controller 40u. Referring to Fig. 10, u-phase arm controller 40u includes a positive-side command generator 41, a negative-side command generator 42, an interphase balance controller 43, a positive/negative balance controller 44, and a circulating current controller 51. U-phase arm controller 40u further includes adders 45, 46, and 47 and subtracters 48, 49, and 50.

Adder 45 adds DC voltage command value Vdcref to a value obtained by multiplying AC voltage command value Vacuref by -1 by positive-side command generator 41. U-phase positive-side arm voltage command value Vupref is thus generated.

Adder 46 adds DC voltage command value Vdcref to a value obtained by multiplying AC voltage command value Vacuref by +1 by negative-side command generator 42. U-phase negative-side arm voltage command value Vunref is thus generated.

Subtracter 48 calculates a deviation ΔVcu between all-capacitor voltage mean value Vcall and u-phase capacitor voltage mean value Vcu. Deviation ΔVcu means variations in voltage of capacitors between different phases (that is, capacitor voltage variations).

Interphase balance controller 43 performs computation on deviation ΔVcu calculated by subtracter 48. Interphase balance controller 43 may be configured as, for example, a PI controller, a PID controller, or another controller for use in feedback control. As a result, feedback control is performed such that capacitor voltage mean value Vcu is equal to all-capacitor voltage mean value Vcall.

Subtracter 49 calculates a deviation ΔVcupn between u-phase positive-side capacitor voltage mean value Vcup and u-phase negative-side capacitor voltage mean value Vcun. Deviation ΔVcupn means variations in voltage of capacitors between positive-side arm 13u and negative-side arm 14u.

Positive/negative balance controller 44 performs computation on deviation ΔVcupn calculated by subtracter 49. Positive/negative balance controller 44 may be configured as, for example, a PI controller, a PID controller, or another controller for use in feedback control. As a result, feedback control is performed such that negative-side capacitor voltage mean value Vcun is equal to positive-side capacitor voltage mean value Vcup.

Adder 47 adds the computation result by interphase balance controller 43 to the computation result by positive/negative balance controller 44 to generate u-phase circulating current command value Iccuref.

Subtracter 50 calculates a deviation between circulating current command value Iccuref and circulating current value Iccu. Circulating current controller 51 performs computation on the deviation calculated by subtracter 50 to generate u-phase circulating voltage command value Vccuref. Circulating current controller 51 may be configured as, for example, a PI controller, a PID controller, or another controller for use in feedback control.

Communication device 52 transmits positive-side arm voltage command value Vupref, circulating voltage command value Vccuref, and positive-side capacitor voltage mean value Vcup to cell individual controller 61 of each converter cell 1 included in positive-side arm 13u. Communication device 52 further transmits negative-side arm voltage command value Vunref, circulating voltage command value Vccuref, and negative-side capacitor voltage mean value Vcun to cell individual controller 61 of each converter cell 1 included in negative-side arm 14u.

In the description above, the calculation of positive-side arm voltage command value Vupref and negative-side arm voltage command value Vunref and the calculation of circulating voltage command value Vccuref are independent of each other. Therefore, the calculation cycle of circulating voltage command value Vccuref can be made shorter than the calculation cycle of positive-side arm voltage command value Vupref and negative-side arm voltage command value Vunref. As a result, the controllability of circulating current that changes faster than AC current of AC circuit 2 and DC current of DC circuit 4 can be improved.

As will be described in detail later, the above deviations ΔVcu and ΔVcupn are used as indicators when the switching frequency of each converter cell 1 is switched.

<Operation of Cell Individual Controller>

The operation of cell individual controller 61 provided in each converter cell 1 will be described. In the following, the operation of cell individual controller 61 for positive-side arm 13u will be described as a representative. The operation of cell individual controller 61 for negative-side arm 14u is the same as the one described below, where the positive-side should read as the negative-side. The operation of cell individual controllers 61 for the v phase and the w phase is the same as the one described below, where the u phase should read as the v phase or the w phase.

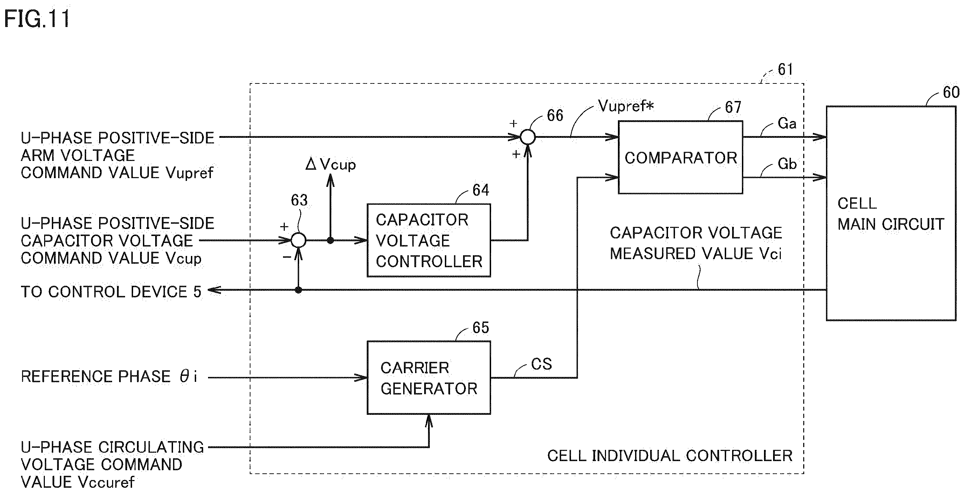

Fig. 11 is a block diagram showing the operation of cell individual controller 61 for positive-side arm 13u. In Fig. 11, the A/D converter for converting capacitor voltage measured value Vci into a digital value is not shown. In Fig. 11, communication device 62 that performs communication between cell individual controller 61 and control device 5 is also not shown.

Referring to Fig. 11, cell individual controller 61 includes a capacitor voltage controller 64, a carrier generator 65, a comparator 67, a subtracter 63, and an adder 66.

Subtracter 63 calculates a deviation ΔVcup between positive-side capacitor voltage mean value Vcup as a capacitor voltage command value and capacitor voltage measured value Vci. As explained with reference to Fig. 10, positive-side capacitor voltage mean value Vcup is received from the corresponding u-phase arm controller 40u. Capacitor voltage measured value Vci is detected in the corresponding cell main circuit 60. As will be described in detail later, deviation ΔVcup is used as an indicator when the switching frequency of each converter cell 1 is switched.

Capacitor voltage controller 64 performs computation on deviation ΔVcup calculated by subtracter 63. Capacitor voltage controller 64 may be configured as, for example, a PI controller, a PID controller, or another controller for use in feedback control. As a result, feedback control is performed such that capacitor voltage measured value Vci is equal to positive-side capacitor voltage mean value Vcup.

Adder 66 adds u-phase positive-side arm voltage command value Vupref to the output of capacitor voltage controller 64 to generate a final u-phase positive-side arm voltage command value Vupref*.

Carrier generator 65 generates a carrier signal CS for use in phase shift pulse width modulation (PWM) control. The phase shift PWM control allows the timings of PWM signals output to a plurality of converter cells 1 in positive-side arm 13u to be shifted from each other. This can reduce harmonic components included in a synthesized voltage of output voltages of converter cells 1. For example, cell individual controllers 61 provided in converter cells 1 generate carrier signals CS shifted in phase from each other, based on a common reference phase θi received from control device 5. For example, a triangular wave is used as carrier signal CS.

Carrier generator 65 further modulates the generated carrier signal CS in accordance with circulating voltage command value Vccuref. Carrier generator 65 then outputs the modulated carrier signal to comparator 67 on the subsequent stage. The pulse width of PWM signal (that is, gate control signals Ga and Gb) generated in comparator 67 on the subsequent stage changes in accordance with circulating voltage command value Vccuref. As a result, the deviation between circulating current command value Iccuref and circulating current value Iccu is controlled to be smaller.

Comparator 67 compares positive-side arm voltage command value Vupref* with carrier signal CS modulated based on circulating voltage command value Vccuref. In accordance with the comparison result, comparator 67 generates gate control signals Ga and Gb as PWM modulation signals for controlling switching elements 1a and 1b included in cell main circuit 60. Gate control signals Ga and Gb are respectively supplied to the control electrodes of switching elements 1a and 1b in Fig. 2. As a result, the output voltage of cell main circuit 60 is controlled in accordance with u-phase circulating current value Iccu.

<Switching of Switching Frequency>

A configuration of switching the switching frequency of the switching elements in each converter cell 1 using the deviations above will be described. In the following description, deviations ΔPr, ΔIr, ΔVcall, and ΔIa in Fig. 7, deviation ΔVs in Fig. 8, deviations ΔVdc, ΔPa, and ΔIdc in Fig. 9, deviations ΔVcu and ΔVcupn in Fig. 10, and deviation ΔVcup in Fig. 11 may be collectively referred to as deviation ΔX.

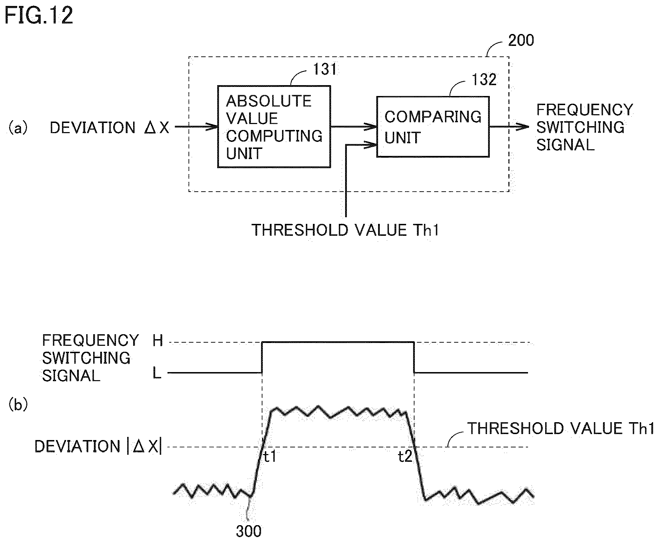

Fig. 12 is a diagram for explaining the operation of a frequency switching unit 200 according to a first embodiment. Specifically, Fig. 12(a) is a block diagram for explaining the function of frequency switching unit 200 included in control device 5. Fig. 12(b) is a timing chart for explaining the timing at which a frequency switching signal is output. The function of frequency switching unit 200 is typically implemented by CPU 74 of control device 5.

Referring to Fig. 12(a), frequency switching unit 200 includes an absolute value computing unit 131 and a comparing unit 132. Absolute value computing unit 131 receives an input of deviation ΔX to calculate the absolute value of deviation ΔX (which hereinafter may be simply referred to as deviation |ΔX|) and outputs the calculated absolute value to comparing unit 132. "| |" represents the absolute value symbol. For example, when deviation ΔX is deviation ΔIr between reactive current command value Irref and reactive current value Ir, absolute value computing unit 131 calculates absolute value |ΔIr| of deviation ΔIr.

Comparing unit 132 outputs a frequency switching signal for switching the switching frequency of the switching elements in each converter cell 1, based on a threshold value Th1 and deviation |ΔX|. Referring to Fig. 12(b), a waveform 300 is a waveform indicating deviation |ΔX|. In a period before time t1, deviation |ΔX| is less than threshold value Th1. In this case, comparing unit 132 outputs a frequency switching signal at low level (which hereinafter may be referred to as "frequency switching signal L"). After time t1, in a period before time t2, deviation |ΔX| is equal to or greater than threshold value Th1. In this case, comparing unit 132 outputs a frequency switching signal at high level (which hereinafter may be referred to as "frequency switching signal H"). In a period after time t2, deviation |ΔX| is less than threshold value Th1. In this case, comparing unit 132 outputs frequency switching signal L.

The frequency switching signal output from comparing unit 132 is input to carrier generator 65 in Fig. 11. When an input of frequency switching signal L is being accepted from control device 5, carrier generator 65 sets the frequency of carrier signal CS (hereinafter referred to as "carrier frequency") to a frequency F (for example, 180 Hz) used when power converter 6 is operated normally. Thus, switching elements 1a and 1b in each converter cell 1 perform switching operation in accordance with the carrier frequency set to frequency F (that is, switching frequency).

On the other hand, when an input of frequency switching signal H is being accepted from control device 5, carrier generator 65 sets the carrier frequency to a frequency FH higher than frequency F. Frequency FH is approximately several times higher than frequency F. Thus, switching elements 1a and 1b in each converter cell 1 perform switching operation at a higher speed in accordance with the carrier frequency set to frequency FH.

The reason why the carrier frequency (that is, switching frequency) is changed in accordance with the magnitude of deviation |ΔX| in this way will be described. Specifically, when the absolute value of deviation ΔX (for example, deviation ΔIr) is equal to or greater than threshold value Th1, it means that the feedback value (for example, reactive current value Ir) from power converter 6 does not follow a control command value (for example, reactive current command value Irref) for power converter 6. In this case, the feedback value needs to converge to the control command value quickly. For this, when deviation $|\Delta X|$ is equal to or greater than threshold value Th1 (that is, when frequency switching signal H is output), control device 5 according to the present embodiment allows switching elements 1a and 1b in each converter cell 1 to perform switching operation at a high switching frequency (that is, frequency FH).

On the other hand, when deviation $|\Delta X|$ is less than threshold value Th1, it means that the feedback value from power converter 6 follows the control command value for power converter 6. In this way, when the deviation between the feedback value and the control command value is small, it is not necessary to increase the switching frequency to increase the responsiveness of power converter 6. The power conversion efficiency of power converter 6 is dependent on switching loss of switching elements 1a and 1b in each converter cell 1, and the switching loss increases with a higher switching frequency. For this, when deviation $|\Delta X|$ is less than threshold value Th1 (that is, when frequency switching signal L is output), control device 5 according to the present embodiment allows switching elements 1a and 1b in each converter cell 1 to perform switching operation at a low switching frequency (that is, frequency F), thereby reducing the switching loss.

In the example in Fig. 12, in a period before time t1, the switching frequency is frequency F, in a period from time t1 to time t2, the switching frequency is frequency FH, and in a period after time t2, the switching frequency is frequency F.

In short, control device 5 calculates deviation $|\Delta X|$ between the control command value for power converter 6 and the feedback value from power converter 6. When deviation $|\Delta X|$ is equal to or greater than threshold value Th1, control device 5 performs control to increase the switching frequency of switching elements 1a and 1b (for example, frequency switching signal H is output to change frequency F to frequency FH). Then, when deviation $|\Delta X|$ becomes less than threshold value Th1 after the control is performed to increase the switching frequency of switching elements 1a and 1b, control device 5 performs control to reduce the increased switching frequency (for example, frequency switching signal L is output to change frequency FH to frequency F).

In the description above, the control command value, the feedback value, and deviation $\Delta X$ are reactive current command value Irref, reactive current value Ir, and deviation $\Delta Ir$, respectively, by way of example. Other combinations of the control command value, the feedback value, and deviation $\Delta X$ concerning AC control unit 35 in Fig. 7 are as follows. When deviation $\Delta X$ is deviation $\Delta Pr$, the control command value and the feedback value are reactive power command value Prref and reactive power value Pr, respectively. When deviation $\Delta X$ is deviation $\Delta Vcall$, the control command value and the feedback value are command value Vcallref and all-capacitor voltage mean value Vcall, respectively. When deviation $\Delta X$ is deviation $\Delta Ia$, the control command value and the feedback value are active current command value Iaref and active current value Ia, respectively. When deviation $\Delta X$ is deviation $\Delta Vs$, the control command value and the feedback value are system voltage command value Vsref and system voltage value Vs, respectively.

Combinations of the control command value, the feedback value, and deviation $\Delta X$ concerning DC control unit 36 in Fig. 9 are as follows. When deviation $\Delta X$ is deviation $\Delta Vdc$, the control command value and the feedback value are the DC terminal voltage command value and DC terminal voltage value Vdc, respectively. When deviation $\Delta X$ is deviation $\Delta Pa$, the control command value and the feedback value are active power command value Paref and active power value Pa, respectively. When deviation $\Delta X$ is deviation $\Delta Idc$, the control command value and the feedback value are DC current command value Idcref and DC current value Idc, respectively.

Combinations of the control command value, the feedback value, and deviation $\Delta X$ concerning u-phase arm controller 40u in Fig. 10 are as follows. When deviation $\Delta X$ is deviation $\Delta Vcu$, the control command value and the feedback value are all-capacitor voltage mean value Vcall as the interphase balance command value, and capacitor voltage mean value Vcu, respectively. When deviation $\Delta X$ is deviation $\Delta Vcupn$, the control command value and the feedback value are positive-side capacitor voltage mean value Vcup as the positive/negative balance command value, and negative-side capacitor voltage mean value Vcun, respectively.

When deviation $\Delta X$ is deviation $\Delta Vcup$ for cell individual controller 61 in Fig. 11, the control command value and the feedback value are positive-side capacitor voltage mean value Vcup as capacitor voltage command value, and capacitor voltage measured value Vci, respectively.

The configuration in Fig. 12 can increase the switching frequency of the switching elements in each converter cell 1 at a timing when the feedback value does not follow the control command value and the responsiveness of power converter 6 needs to be increased. Subsequently, when the feedback value comes to follow the control command value, the switching frequency of the switching elements in converter cell 1 is reduced thereby reducing the switching loss.

(First Modification)

In the example in Fig. 12, when deviation $|\Delta X|$ oscillates in the vicinity of threshold value Th1, chattering may occur. Then, in a first modification, a configuration in which a dead zone function is added to comparing unit 132 in Fig. 12 will be described.

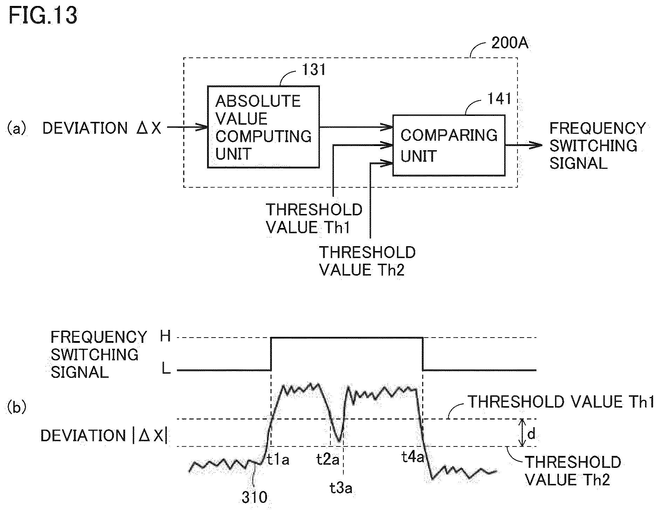

Fig. 13 is a diagram for explaining the operation of a frequency switching unit 200A according to the first modification to the first embodiment. Specifically, Fig. 13(a) is a block diagram for explaining the function of frequency switching unit 200A. Fig. 13(b) is a timing chart for explaining the timing at which a frequency switching signal is output.

Referring to Fig. 13(a), frequency switching unit 200A includes an absolute value computing unit 131 and a comparing unit 141. Frequency switching unit 200A corresponds to the one in which comparing unit 132 of frequency switching unit 200 is replaced by comparing unit 141 with a dead zone function.

Comparing unit 141 outputs a frequency switching signal for switching the switching frequency of the switching elements in each converter cell 1, based on a threshold value Th1, a threshold value Th2 (where Th2<Th1), and deviation |ΔX|. The width d from threshold value Th1 to threshold value Th2 corresponds to a dead zone.

Referring to Fig. 13(b), a waveform 310 is a waveform indicating deviation |ΔX|. In a period before time t1a, deviation |ΔX| is less than threshold value Th1. In this period, comparing unit 141 outputs frequency switching signal L. In a period from time t1a to time t2a, deviation |ΔX| is equal to or greater than threshold value Th1. In a period from time t2a to time t3a, deviation |ΔX| is less than threshold value Th1 and equal to or greater than threshold value Th2. In a period from time t3a to time t4a, deviation |ΔX| is equal to or greater than threshold value Th1. Here in a period from time t1a to time t4a, comparing unit 141 outputs frequency switching signal H. In a period after time t4a, deviation |ΔX| is less than threshold value Th2. In this period, comparing unit 141 outputs frequency switching signal L.

In this way, when deviation |ΔX| becomes equal to or greater than threshold value Th1 and frequency switching signal H is output, comparing unit 141 keeps the output of frequency switching signal H as long as deviation |ΔX| is equal to or greater than threshold value Th2. The switching frequency of switching elements 1a and 1b therefore does not change. Then, when deviation |ΔX| becomes less than threshold value Th2, comparing unit 141 outputs frequency switching signal L.

Therefore, in the example in Fig. 13, in a period before time t1a, the switching frequency is frequency F, in a period from time t1a to time t4a, the switching frequency is frequency FH, and in a period after time t4a, the switching frequency is frequency F.

In short, when deviation |ΔX| becomes equal to or greater than threshold value Th1, control device 5 performs control to increase the switching frequency of switching elements 1a and 1b (for example, frequency F is changed to frequency FH). Then, when deviation |ΔX| becomes less than threshold value Th2 smaller than threshold value Th1 after the control is performed to increase the switching frequency of switching elements 1a and 1b, control device 5 performs control to reduce the increased switching frequency (for example, frequency FH is changed to frequency F).

The configuration in Fig. 13 can prevent occurrence of chattering of the switching frequency, in addition to the advantage of the configuration in Fig. 12.

(Second Modification)

In a second modification, another configuration for preventing occurrence of chattering will be described.

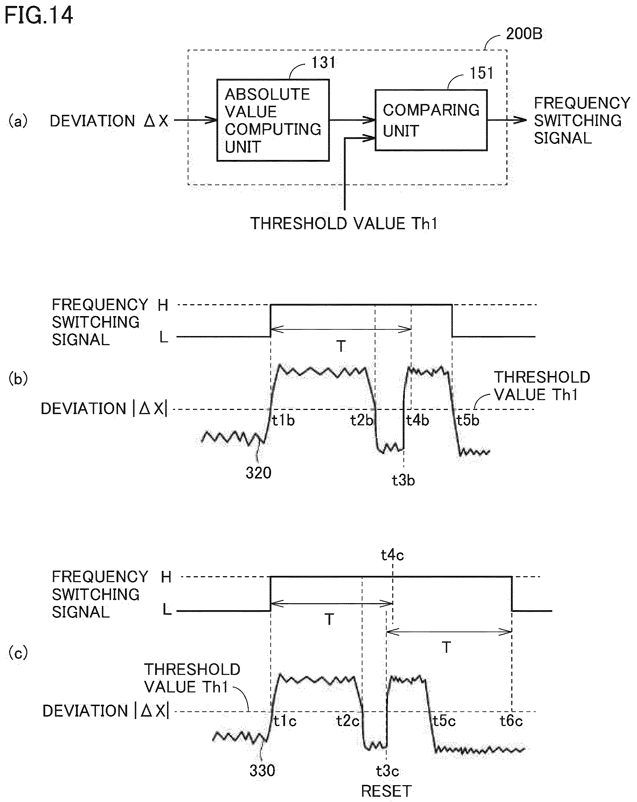

Fig. 14 is a diagram for explaining the operation of a frequency switching unit 200B according to the second modification to the first embodiment. Specifically, Fig. 14(a) is a block diagram for explaining the function of frequency switching unit 200B. Fig. 14(b) is an example of a timing chart for explaining the timing at which a frequency switching signal is output. Fig. 14(c) is another example of a timing chart for explaining the timing at which a frequency switching signal is output.

Referring to Fig. 14(a), frequency switching unit 200B includes an absolute value computing unit 131 and a comparing unit 151. Frequency switching unit 200B corresponds to the one in which comparing unit 132 of frequency switching unit 200 is replaced by comparing unit 151 with a timer function.

Comparing unit 151 outputs a frequency switching signal for switching the switching frequency of the switching elements in each converter cell 1, based on a threshold value Th1 and deviation |ΔX|.

Referring to Fig. 14(b), a waveform 320 is a waveform indicating deviation |ΔX|. In a period before time t1b, deviation |ΔX| is less than threshold value Th1. In this period, comparing unit 151 outputs frequency switching signal L. In a period from time t1b to time t2b, deviation |ΔX| is equal to or greater than threshold value Th1.

Comparing unit 151 keeps the output of frequency switching signal H in a period until a timer time period T elapses since frequency switching signal H is output (in the example in Fig. 14, the time period from time t1b to time t4b). Therefore, although deviation |ΔX| is less than threshold value Th1 in a period from time t2b to time t3b, comparing unit 151 keeps the output of frequency switching signal H. Then, in a period from time t3b before the elapse of timer time period T to time t5b, deviation |ΔX| is equal to or greater than threshold value Th1. Therefore, comparing unit 151 keeps the output of frequency switching signal H even in a period from time t3b to time t5b. As a result, in a period from time t1b to time t5b, comparing unit 151 outputs frequency switching signal H.

Then, when time t5b is reached after timer time period T elapses, deviation |ΔX| becomes less than threshold value Th1. Therefore, in a period after time t5b, comparing unit 151 outputs frequency switching signal L.

In this way, when deviation |ΔX| becomes equal to or greater than threshold value Th1 and frequency switching signal H is output, comparing unit 151 keeps the output of frequency switching signal H until timer time period T elapses, even when deviation |ΔX| becomes less than threshold value Th1. The switching frequency of switching elements 1a and 1b therefore does not change. Then, when deviation |ΔX| becomes less than threshold value Th1 after the elapse of timer time period T, comparing unit 151 outputs frequency switching signal L.

In the example in Fig. 14(b), in a period before time t1b, the switching frequency is frequency F, in a period from time t1b to time t5b, the switching frequency is frequency FH, and in a period after time t5b, the switching frequency is frequency F.

In short, until timer time period T elapses after deviation |ΔX| becomes equal to or greater than threshold value Th1, control device 5 performs control to increase the switching frequency of switching elements 1a and 1b (for example, frequency F is changed to frequency FH). When deviation |ΔX| becomes less than threshold value Th1 after the elapse of timer time period T since threshold value Th1 or greater, control device 5 performs control to reduce the increased switching frequency (for example, frequency FH is changed to frequency F).

Comparing unit 151 may be configured such that timer time period T is reset as shown in Fig. 14(c). Specifically, referring to Fig. 14(c), a waveform 330 is a waveform indicating deviation |ΔX|. In a period before time t1c, deviation |ΔX| is less than threshold value Th1. In this period, comparing unit 151 outputs frequency switching signal L. In a period from time t1c to time t2c, deviation |ΔX| is equal to or greater than threshold value Th1.

Comparing unit 151 keeps the output of frequency switching signal H in a period until timer time period T elapses since frequency switching signal H is output (in the example in Fig. 14(c), the time period from time t1c to time t4c). Therefore, although deviation |ΔX| is less than threshold value Th1 in a period from time t2c to time t3c, comparing unit 151 keeps the output of frequency switching signal H.

Then, at time t3c before time t4c when timer time period T elapses, deviation |ΔX| is equal to or greater than threshold value Th1. That is, deviation |ΔX| becomes less than threshold value Th1 at time t2c and thereafter becomes equal to or greater than threshold value Th1 again at time t3c. Therefore, previous timer time period T is reset, and comparing unit 151 keeps the output of frequency switching signal H in a period from time t3c to the elapse of timer time period T (in the example in Fig. 14(c), a period from time t3c to time t6c). In this way, although deviation |ΔX| is less than threshold value Th1 after time t5c, comparing unit 151 keeps the output of frequency switching signal H in a period from time t5c to time t6c. Then, at time t6c when timer time period T elapses, deviation |ΔX| is less than threshold value Th1 and therefore comparing unit 151 outputs frequency switching signal L.

In the example in Fig. 14(c), in a period before time t1c, the switching frequency is frequency F, in a period from time t1c to time t6c, the switching frequency is frequency FH, and in a period after time t6c, the switching frequency is frequency F.

In short, until timer time period T elapses after deviation |ΔX| becomes equal to or greater than threshold value Th1, control device 5 performs control to increase the switching frequency of switching elements 1a and 1b (for example, frequency F is changed to frequency FH). When deviation |ΔX| is less than threshold value Th1 when timer time period T elapses since deviation |ΔX| becomes equal to or greater than threshold value Th1 (for example, when time t6c is reached), control device 5 performs control to reduce the increased switching frequency of the switching elements (for example, frequency FH is changed to frequency F).

The configuration in Fig. 14 can prevent occurrence of chattering of the switching frequency, in addition to the advantage of the configuration in Fig. 12.

(Third Modification)

In the description above, carrier generator 65 sets the carrier frequency (that is, switching frequency) to frequency F when an input of frequency switching signal L is being accepted, and sets the switching frequency to frequency FH when an input of frequency switching signal H is being accepted. In a third modification, a modification of a method of increasing the switching frequency will be described.

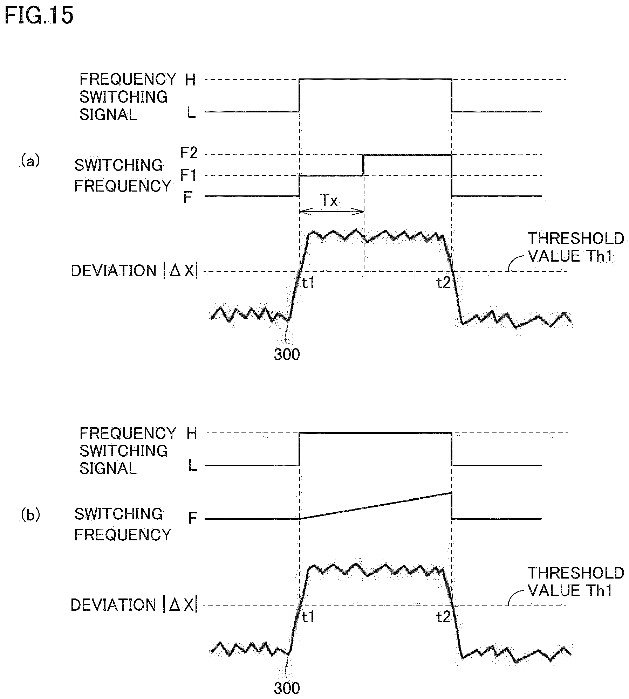

Fig. 15 is a diagram for explaining a method of increasing the switching frequency according to the third modification to the first embodiment. Fig. 15(a) is a diagram showing an example of a method of increasing the switching frequency. Fig. 15(b) is a diagram showing another example of a method of increasing the switching frequency.

In the examples in Fig. 15(a) and Fig. 15(b), deviation |ΔX| is less than threshold value Th1 in a period before time t1, and therefore comparing unit 132 outputs frequency switching signal L in the same manner as in the example in Fig. 12. Since deviation |ΔX| is equal to or greater than threshold value Th1 in a period from time t1 to time t2, comparing unit 132 outputs frequency switching signal H. In a period after time t2, since deviation |ΔX| is less than threshold value Th1, comparing unit 132 outputs frequency switching signal L.

Referring to Fig. 15(a), when accepting an input of frequency switching signal H at time t1, carrier generator 65 sets the carrier frequency to a frequency F1 which is increased by one level from frequency F at present. Furthermore, when an input of frequency switching signal H is continuously accepted since time t1, carrier generator 65 sets the carrier frequency to a frequency F2 which is further increased by one level from frequency F1 at present, after the elapse of a certain period (for example, time period Tx) since time t1. Then, when accepting an input of frequency switching signal L at time t2, carrier generator 65 returns the carrier frequency from frequency F2 at present to frequency F before the increase. In this way, carrier generator 65 may increase the switching frequency stepwise in accordance with frequency switching signal H from control device 5.

As another example, referring to Fig. 15(b), when accepting an input of frequency switching signal H at time t1, carrier generator 65 continuously increases the carrier frequency from frequency F at present. In the example in Fig. 15(b), carrier generator 65 accepts an input of frequency switching signal H in a period from time t1 to time t2. In this period, therefore, carrier generator 65 continuously increases the carrier frequency. Then, when accepting an input of frequency switching signal L at time t2, carrier generator 65 returns the carrier frequency from the frequency at present to frequency F before the increase. In this way, carrier generator 65 may continuously increase the switching frequency in accordance with frequency switching signal H from control device 5.

The carrier frequency may have an upper limit. In this case, carrier generator 65 continuously increases the carrier frequency until the upper limit is reached, and keeps the carrier frequency at the upper limit value after the upper limit is reached. In Fig. 15(b), the switching frequency is linearly increased. However, it may be increased in a curved line.

In this way, control device 5 may be configured to increase the switching frequency of switching elements 1a and 1b stepwise or continuously by outputting frequency switching signal H to carrier generator 65.

Second Embodiment

The foregoing first embodiment focuses on a variety of deviations ΔX to increase the switching frequency. In a second embodiment, the control command value described above is used to switch the switching frequency of switching elements of each converter cell 1. In the following description, reactive power command value Prref, reactive current command value Irref, command value Vcallref, and active current command value Iaref in Fig. 7, system voltage command value Vsref in Fig. 8, DC terminal voltage command value, active power command value Paref, and DC current command value Idcref in Fig. 9, all-capacitor voltage mean value Vcall and positive-side capacitor voltage mean value Vcup in Fig. 10, and positive-side capacitor voltage mean value Vcup in Fig. 11 are collectively referred to as control command value SX.

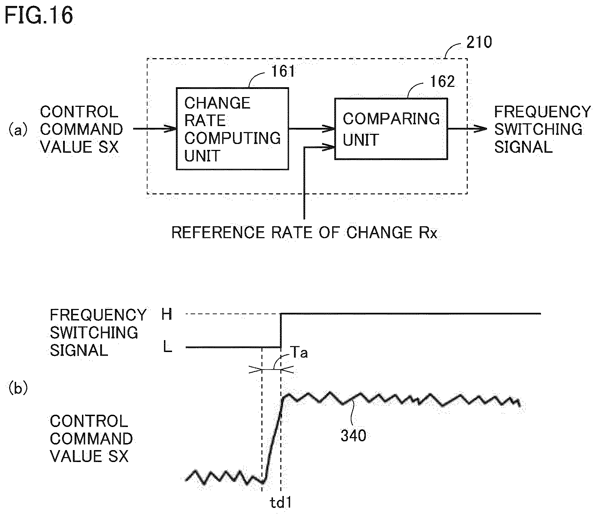

Fig. 16 is a diagram for explaining the operation of a frequency switching unit 210 according to the second embodiment. Specifically, Fig. 16(a) is a block diagram for explaining the function of frequency switching unit 210 included in control device 5. Fig. 16(b) is a timing chart for explaining the timing at which a switching signal is output.

Referring to Fig. 16(a), frequency switching unit 210 includes a change rate computing unit 161 and a comparing unit 162. When accepting an input of control command value SX, change rate computing unit 161 calculates a rate of change R of control command value SX per unit time period (for example, unit time period Ta in Fig. 16(b)) and outputs the calculated rate of change R to comparing unit 162.

Comparing unit 162 outputs a frequency switching signal for switching the switching frequency of the switching elements in each converter cell 1, based on a reference rate of change Rx and the rate of change R. Referring to Fig. 16(b), a waveform 340 is a waveform indicating control command value SX. In a period before time td1, comparing unit 162 determines that the rate of change R is less than the reference rate of change Rx. Therefore, in this period, comparing unit 162 outputs frequency switching signal L. Subsequently, when it is determined that the rate of change R is equal to or greater than the reference rate of change Rx at time td1, comparing unit 162 outputs frequency switching signal H.

The frequency switching signal output from comparing unit 162 is input to carrier generator 65 in Fig. 11. When an input of frequency switching signal L is being accepted, carrier generator 65 sets the carrier frequency to frequency F. When an input of frequency switching signal H is being accepted, carrier generator 65 sets the carrier frequency to frequency FH higher than frequency F. As described in the third modification to the first embodiment, carrier generator 65 may increase the carrier frequency stepwise or continuously in accordance with frequency switching signal H from control device 5.

The output of comparing unit 162 is changed from frequency switching signal H to frequency switching signal L, based on deviation |ΔX| described in the first embodiment. For example, according to the configuration in Fig. 12, comparing unit 162 outputs frequency switching signal L when it is determined that deviation |ΔX| is less than threshold value Th1.

According to the second embodiment, control device 5 performs control to increase the switching frequency of switching elements 1a and 1b when the rate of change R of the control command value for power converter 6 becomes equal to or greater than the reference rate of change Rx. Accordingly, the switching frequency is increased immediately when the control command value abruptly changes, so that the switching frequency can be increased more quickly.

Other Embodiments

(1) In the foregoing first embodiment, deviation |ΔX| becomes equal to or greater than threshold value Th1 and the switching frequency is increased from frequency F to frequency FH, and thereafter when deviation |ΔX| becomes less than threshold value Th1, the switching frequency is returned from frequency FH to frequency F. However, the present disclosure is not limited to this configuration. For example, as long as the frequency is reduced from frequency FH when deviation |ΔX| becomes less than threshold value Th1, the frequency may not necessarily be returned to exactly the same frequency F.

(2) In the foregoing first embodiment, the switching frequency is changed using any one of a variety of deviations ΔX. However, the present disclosure is not limited to this configuration. A plurality of frequency switching units 200 each corresponding to one of a plurality of deviations ΔX may be provided, and the final frequency switching signal may be output based on a combination of the respective outputs of frequency switching units 200. For example, the final frequency switching signal H may be input to carrier generator 65 when frequency switching unit 200 corresponding to at least one of a plurality of deviations ΔX outputs frequency switching signal H. Alternatively, the final frequency switching signal H may be input to carrier generator 65 when frequency switching unit 200 corresponding to a first deviation (for example, deviation ΔIr) among a plurality of deviations ΔX outputs frequency switching signal H, and frequency switching unit 200 corresponding to a second deviation (for example, deviation ΔVs) outputs frequency switching signal H.

Similarly, also in the foregoing second embodiment, a plurality of frequency switching units 210 each corresponding to one of a plurality of control command values SX may be provided, and the final frequency switching signal may be output based on a combination of the respective outputs of frequency switching units 210.

(3) The configurations exemplified as the embodiments are examples of the configurations of the present disclosure and may be combined with other known techniques or may be modified, for example, partially omitted, without departing from the spirit of the present disclosure. In the foregoing embodiments, the processing and configuration described in another embodiment may be employed as appropriate and carried out.

Embodiments disclosed here should be understood as being illustrative rather than being limitative in all respects. The scope of the present disclosure is shown not in the foregoing description but in the claims, and it is intended that all modifications that come within the meaning and range of equivalence to the claims are embraced here.

REFERENCE SIGNS LIST

1 converter cell, 1a, 1b, 1f, 1g switching element, 1c, 1d, 1h, 1i diode, 1e capacitor, 1n, 1p input/output terminal, 2 AC circuit, 3 transformer, 4 DC circuit, 5 control device, 6 power converter, 7a, 7b reactor, 8u, 8v, 8w leg circuit, 9a, 9b arm current detector, 10 AC voltage detector, 11a, 11b DC voltage detector, 13u, 13v, 13w positive-side arm, 14u, 14v, 14w negative-side arm, 15 AC current detector, 20 arm common controller, 21 current computing unit, 22 mean value computing unit, 23, 82 computing unit, 25 reactive power controller, 27 reactive current controller, 29 DC capacitor voltage controller, 31 active current controller, 32 two phase/three phase converter, 35 AC control unit, 36 DC control unit, 40u, 40v, 40w arm controller, 41 positive-side command generator, 42 negative-side command generator, 43 interphase balance controller, 44 positive/negative balance controller, 51 circulating current controller, 52, 62 communication device, 60F, 60H, 60Hyb cell main circuit, 61 cell individual controller, 64 capacitor voltage controller, 65 carrier generator, 67 comparator, 70 input converter, 71 sample and hold circuit, 72 multiplexer, 73 A/D converter, 74 CPU, 75 RAM, 76 ROM, 77 input/output interface, 78 auxiliary storage device, 79 bus, 81 DC controller, 84 active power controller, 86 DC current controller, 100 power conversion device, 121 system voltage controller, 131 absolute value computing unit, 132, 141, 151, 162 comparing unit, 161 change rate computing unit, 200, 200A, 200B, 210 frequency switching unit.

**Claims**

1. A power conversion device comprising:

   a self-commutated power converter to perform power conversion between an AC circuit and a DC circuit; and
   a control device to control switching operation of a switching element included in the self-commutated power converter, wherein
   the control device

   calculates a deviation between a control command value for the self-commutated power converter and a feedback value from the self-commutated power converter, and performs first control to increase a switching frequency of the switching element when the deviation becomes equal to or greater than a first threshold value.

2. The power conversion device according to claim 1, wherein when the deviation becomes less than the first threshold value after the first control is performed, the control device performs second control to reduce the increased switching frequency of the switching element.

3. The power conversion device according to claim 1, wherein when the deviation becomes less than a second threshold value smaller than the first threshold value after the first control is performed, the control device performs second control to reduce the increased switching frequency of the switching element.

4. The power conversion device according to any one of claims 1 to 3,

wherein the control device performs the first control until a first time period elapses since the deviation becomes equal to or greater than the first threshold value.

5. The power conversion device according to any one of claims 1 to 3,
wherein
the control device

performs the first control until a first time period elapses since the deviation becomes equal to or greater than the first threshold value, and performs second control to reduce the switching frequency of the switching element that is increased in accordance with the first control, when the deviation is less than the first threshold value when the first time period elapses since the deviation becomes equal to or greater than the first threshold value.

6. The power conversion device according to any one of claims 1 to 5,
wherein the first control includes increasing a switching frequency of the switching element stepwise or continuously.

7. The power conversion device according to any one of claims 1 to 6,
wherein

the control command value is a reactive current command value, and
the feedback value is a reactive current value calculated based on an AC current and an AC voltage in the AC circuit.

8. The power conversion device according to any one of claims 1 to 6,
wherein

the control command value is an active current command value, and
the feedback value is an active current value calculated based on an AC current and an AC voltage in the AC circuit.

9. The power conversion device according to any one of claims 1 to 6,
wherein

the control command value is a system voltage command value, and
the feedback value is a system voltage value of the AC circuit.

10. The power conversion device according to any one of claims 1 to 9,

wherein

the self-commutated power converter includes a plurality of leg circuits, and
the leg circuits each include a plurality of converter cells cascaded to each other, and the converter cells each include a capacitor and the switching element.

11. The power conversion device according to any one of claims 1 to 6,
wherein

the self-commutated power converter includes a plurality of leg circuits, and
the leg circuits each include a plurality of converter cells cascaded to each other, and the converter cells each include a capacitor and the switching element,
the control command value is a capacitor voltage command value, and
the feedback value is a capacitor voltage measured value detected in the capacitor.

12. A power conversion device comprising:

a self-commutated power converter to perform power conversion between an AC circuit and a DC circuit; and
a control device to control switching operation of a switching element included in the self-commutated power converter,
wherein the control device performs control to increase a switching frequency of the switching element when a rate of change of a control command value for the self-commutated power converter becomes equal to or greater than a reference rate of change.

FIG.1

FIG.2

FIG.3

FIG.4

FIG.5

# FIG.6

AC VOLTAGE COMMAND VALUE

AC VOLTAGE MEASURED VALUE (Vacu, Vacv, Vacw)

DC VOLTAGE MEASURED VALUE (Vdcp, Vdcn)

AC CURRENT MEASURED VALUE FROM 15

ARM CURRENT MEASURED VALUE (Iup, Iun, Ivp, Ivn, Iwp, Iwn)

AC CONTROL UNIT — 35

Vacuref
Vacvref
Vacwref

DC CONTROL UNIT — 36

DC CURRENT VALUE (Idc)

AC CURRENT VALUE (Iacu, Iacv, Iacw)

CIRCULATING CURRENT VALUE (Iccu, Iccv, Iccw)

DC VOLTAGE COMMAND VALUE (Vdcref)

CURRENT COMPUTING UNIT — 21

CAPACITOR VOLTAGE MEASURED VALUE OF EACH CELL (Vci)

MEAN VALUE COMPUTING UNIT — 22

CAPACITOR VOLTAGE MEAN VALUE
Vciav=Vcup, Vcun, Vcu,···

— 20

# FIG.7

FIG.8

SYSTEM VOLTAGE
COMMAND VALUE Vsref

24a

$\Delta$Vs

121

SYSTEM
VOLTAGE
CONTROLLER

REACTIVE CURRENT
COMMAND VALUE Irref

SYSTEM VOLTAGE VALUE Vs

FIG.9

(a)

DC CONTROL UNIT (FOR RECTIFIER) 36

DC TERMINAL VOLTAGE MEASURED VALUE (Vdcp−Vdcn)

DC TERMINAL VOLTAGE COMMAND VALUE

− + 80

ΔVdc

DC CONTROLLER 81

DC VOLTAGE COMMAND VALUE Vdcref

(b)

DC CONTROL UNIT (FOR INVERTER) 36

AC VOLTAGE MEASURED VALUE Vacu, Vacv, Vacw

AC CURRENT MEASURED VALUE FROM 15

COMPUTING UNIT 82

ACTIVE POWER VALUE Pa

ACTIVE POWER COMMAND VALUE Paref

− + 83

ΔPa

ACTIVE POWER CONTROLLER 84

DC CURRENT COMMAND VALUE Idcref

DC CURRENT VALUE Idc

− + 85

ΔIdc

DC CURRENT CONTROLLER 86

DC VOLTAGE COMMAND VALUE Vdcref

# FIG.10

FIG.11

EP 4 224 696 A1

28

U-PHASE POSITIVE-SIDE
ARM VOLTAGE
COMMAND VALUE Vupref

U-PHASE POSITIVE-SIDE
CAPACITOR VOLTAGE
COMMAND VALUE Vcup

TO CONTROL DEVICE 5

REFERENCE PHASE $\theta$ i

U-PHASE CIRCULATING
VOLTAGE COMMAND
VALUE Vccuref

$\Delta$ Vcup

63

64  CAPACITOR
VOLTAGE
CONTROLLER

65  CARRIER
GENERATOR

CS

61

66  Vupref*

67  COMPARATOR

Ga

Gb

CAPACITOR VOLTAGE
MEASURED VALUE Vci

CELL INDIVIDUAL CONTROLLER

60  CELL
MAIN CIRCUIT

# FIG.12

(a)   DEVIATION ΔX → 

ABSOLUTE VALUE COMPUTING UNIT 131

COMPARING UNIT 132

→ FREQUENCY SWITCHING SIGNAL

200

THRESHOLD VALUE Th1

(b)

FREQUENCY SWITCHING SIGNAL   H
L

DEVIATION |ΔX|

THRESHOLD VALUE Th1

t1        t2

300

FIG.13

(a) DEVIATION Δ X ⟶

131

ABSOLUTE
VALUE
COMPUTING
UNIT

⟶

141

COMPARING
UNIT

⟶ FREQUENCY
SWITCHING
SIGNAL

200A

THRESHOLD
VALUE Th1

THRESHOLD
VALUE Th2

(b)

FREQUENCY H
SWITCHING
SIGNAL L

DEVIATION |Δ X|

THRESHOLD VALUE Th1

d

THRESHOLD
VALUE Th2

t1a  t2a     t4a

310     t3a

# FIG.14

(a) DEVIATION △X ——→ 

```
┌─────────────────────────────────────────────────────────┐ 200B
│        ┌──131                    ┌──151                   │
│     ┌──────────┐              ┌──────────┐                │
│     │ABSOLUTE  │              │          │        FREQUENCY
│     │VALUE     │ ──────────→  │COMPARING │ ──→   SWITCHING
│     │COMPUTING │              │UNIT      │        SIGNAL
│     │UNIT      │          →   │          │                │
│     └──────────┘          │   └──────────┘                │
└───────────────────────────┼─────────────────────────────┘
                            │
                 THRESHOLD VALUE Th1
```

(b)

```
FREQUENCY  H ------------    ┌───────────────────┐  --------------
SWITCHING
SIGNAL     L  _____|  ←——————— T ——————→ |_____
                            t1b        t2b   t4b   t5b
                                                         THRESHOLD
                                                         VALUE Th1
DEVIATION |△X| -----------------------------------------------------
              ∿∿∿∿∿      t1b        t2b   t4b   t5b
                                          t3b

              320                         t3b
```

(c)

```
                                    t4c
FREQUENCY  H --------  ┌──────────────────┐ ----------------
SWITCHING
SIGNAL     L  _____|  ←——— T ———→      |
                                    ←————— T ——————→
                       t1c    t2c   t5c          t6c
         THRESHOLD
         VALUE Th1
DEVIATION |△X| -------------------------------------------------
              ∿∿∿     t1c    t2c          t5c    t6c
                             t3c
              330            t3c
                            RESET
```

## FIG.15

(a)

FREQUENCY SWITCHING SIGNAL: H, L

SWITCHING FREQUENCY: F2, F1, F

Tx

DEVIATION $|\Delta X|$

THRESHOLD VALUE Th1

t1　t2

300

(b)

FREQUENCY SWITCHING SIGNAL: H, L

SWITCHING FREQUENCY: F

DEVIATION $|\Delta X|$

THRESHOLD VALUE Th1

t1　t2

300

# FIG.16

(a) CONTROL COMMAND VALUE SX → [CHANGE RATE COMPUTING UNIT 161] → [COMPARING UNIT 162] → FREQUENCY SWITCHING SIGNAL

210

REFERENCE RATE OF CHANGE Rx

(b)

FREQUENCY SWITCHING SIGNAL

H

L

Ta

CONTROL COMMAND VALUE SX

340

td1

## INTERNATIONAL SEARCH REPORT

| International application No. |
|---|
| PCT/JP2020/036960 |

A.  CLASSIFICATION OF SUBJECT MATTER
H02M 7/49(2007.01)i; H02M 7/48(2007.01)i
FI: H02M7/49; H02M7/48 F

According to International Patent Classification (IPC) or to both national classification and IPC

B.   FIELDS SEARCHED

Minimum documentation searched (classification system followed by classification symbols)
H02M1/00-7/98

Documentation searched other than minimum documentation to the extent that such documents are included in the fields searched
```
     Published examined utility model applications of Japan       1922-1996
     Published unexamined utility model applications of Japan     1971-2020
     Registered utility model specifications of Japan             1996-2020
     Published registered utility model applications of Japan     1994-2020
```

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X | JP 2012-55140 A (FANUC CORPORATION) 15 March 2012 (2012-03-15) embodiment 2, paragraphs [0013]-[0019], fig. 1-3 | 1-6 |
| Y | embodiment 2, paragraphs [0013]-[0019], fig. 1-3 | 10-12 |
| A | entire text, all drawings | 7-9 |
| Y | WO 2019/215842 A1 (TOSHIBA CORP.) 14 November 2019 (2019-11-14) paragraphs [0010]-[0057], fig. 1-5 | 10-11 |
| A | entire text, all drawings | 1-9, 12 |
| Y | JP 2020-114097 A (PANASONIC IP MANAGEMENT CO., LTD.) 27 July 2020 (2020-07-27) paragraph [0038] | 12 |
| A | entire text, all drawings | 1-11 |
| A | WO 2014/108964 A1 (PANASONIC CORP.) 17 July 2014 (2014-07-17) entire text, all drawings | 1-12 |

☐   Further documents are listed in the continuation of Box C.      ☒   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 October 2020 (26.10.2020) | 10 November 2020 (10.11.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT
Information on patent family members

International application No.

PCT/JP2020/036960

| Patent Documents referred in the Report | Publication Date | Patent Family | Publication Date |
|---|---|---|---|
| JP 2012-55140 A | 15 Mar. 2012 | US 2012/0056568 A1 embodiment 2, paragraphs [0020]-[0026], fig. 1-3 | |
| WO 2019/215842 A1 | 14 Nov. 2019 | (Family: none) | |
| JP 2020-114097 A | 27 Jul. 2020 | (Family: none) | |
| WO 2014/108964 A1 | 17 Jul. 2014 | (Family: none) | |

Form PCT/ISA/210 (patent family annex) (January 2015)

**EP 4 224 696 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018133950 A